# EUROPEAN PATENT SPECIFICATION

(11) **EP 4 112 792 B1**
(45) Date of publication and mention of the grant of the patent: **25.12.2024**
(21) Application number: 21182508.8
(22) Date of filing: 29.06.2021
(51) Int. Cl.: D03D 47/27, F16H 55/30

(54) **RAPIER WHEEL**
GREIFERRAD
ROUE D'INSERTION

(43) Date of publication of application: 04.01.2023
(73) Proprietor: Picanol, 8900 Ieper (BE)
(72) Inventor: Asrih, Karim, 9080 Lochristi (BE); Mooren, Jeng, 8953 Wijtschate (BE); Delboo, Emmanuel, 8560 Wevelgem (BE); Roelstraete, Kristof, 8550 Zwevegem (BE)
(74) Representative: Patentanwälte Ruff, Wilhelm, Beier, Dauster & Partner mbB

(56) References cited:
- EP-B1- 3 262 222
- WO-A1-2020/126004
- DE-A1- 102014 003 441

## Description

### TECHNICAL FIELD AND PRIOR ART

The invention relates to a rapier wheel for a rapier weaving machine and to a rapier weaving machine with such a rapier wheel.

As generally known, in rapier weaving machines, a gripper is attached at the front end of a rapier for moving the gripper through a shed. The rapier is driven by a rapier wheel arranged next to the shed. The rapier can be a flexible gripper band or a more rigid gripper rod.

A rapier wheel is shown for example in EP 3 262 222 B1, wherein the rapier wheel has a number of spokes, which are arranged in pairs, wherein each pair of spokes comprises two crosswise arranged straight spokes.

### SUMMARY OF THE INVENTION

It is the object of the invention to provide a rapier wheel having a low moment of inertia about its drive shaft that has a high rigidity and durability. It is a further object of the invention to provide a rapier weaving machine with such a rapier wheel.

These objects are solved by the rapier wheel and the rapier weaving machine with the features of claims 1 and 15. Preferred embodiments are defined in the dependent claims.

According to a first aspect, a rapier wheel for a rapier weaving machine is provided, the rapier wheel having an inner ring, an outer ring, and a number spokes, wherein the inner ring is configured and adapted for mounting the inner ring to a drive shaft, wherein the outer ring is provided with teeth configured and adapted for engaging with a rapier for driving the rapier, wherein the spokes extend between the inner ring and the outer ring and connect the inner ring with the outer ring, wherein the spokes are arranged crosswise in pairs of spokes comprising a first spoke and a second spoke, wherein the first spoke and the second spoke extend in opposite directions and cross each other at a crossing point between the inner ring and the outer ring, and wherein the first spoke and the second spoke are each convexly curved toward the outer ring.

In other words, in contrast to prior art EP 3 262 222 B1, in accordance with the invention, the first spokes and the second spokes are each convexly curved toward the outer ring.

In the context of the application, curved spokes, that extend either entirely or in portion along a path which seen in an outward radial direction of the associated pair of spokes is above a virtual straight line connecting ends of the spokes at the inner ring and the outer ring, are referred to as "convexly curved toward the outer ring". As a result of the convex curvature, the crossing point of the first spoke and the second spoke is closer to the outer ring than a crossing point of two virtual straight lines crossing each other, wherein each virtual straight line connects an end point of a spoke of a pair of spokes at the inner ring and an end point of this spoke at the outer ring.

Throughout this description and the claims, the indefinite article "a" or "an" means "one or more". Reference to "a first element" does not mandate presence of "a second element". Further, the expressions "first" and "second" are only used to distinguish elements from one another and are not to be interpreted as indicating any order.

The first spokes and the second spokes are also conjointly referred to as spokes.

Providing convexly curved spokes allows to counter tangential forces as well as radial forces exerted on the outer ring by the rapier, wherein resulting bending stresses on the spokes due to external forces can be reduced or even be avoided. Hence, in an ideal configuration, only pressure forces or tensile forces are acting on the spokes.

The rapier wheel rotates back and forth. Therefore, according to the invention, the spokes are provided in pairs, wherein the two spokes of each pair are curved in opposite directions. The spokes curved in opposite directions allow to counter forces regardless of a direction of rotation of the rapier wheel.

The first spoke for example is curved in a clockwise direction, i.e., its end point at the outer ring is angularly offset in a clockwise direction from its endpoint at the inner ring. In this case, the second spoke is curved in a counterclockwise direction, i.e., its end point at the outer ring is angularly offset in a counterclockwise direction from its end point at the inner ring. The expressions first and second in this context are only intended to distinguish the spokes from each other and not to indicate any relevance or order of the spokes. The shape of the spokes is chosen, such that the first spoke of each pair of spokes does not cross any other first spoke, and the second spoke of each pair of spokes does not cross any other second spoke.

The rapier wheel is manufactured for example by injection molding, milling, waterjet cutting or punching.

In one embodiment, each spoke has a constant radius of curvature, wherein the radius of curvature is the same for all spokes.

In other embodiments, a curvature of each of the spokes starts at a center of the rapier wheel and increases towards the outer ring. In other words, the spokes are spirally curved. In one embodiment, the curvature increases continuously towards the outer ring. The spokes extend between an outer edge of the inner ring and an inner edge of the outer ring. However, a curvature of the spokes starts at an imaginary line at the center of the rapier wheel. The expression "starts at a center" is not to be interpreted in such way that the imaginary line has its center of origin at the center of the rapier wheel. In one embodiment, the curvature is chosen such that the curvature asymptotically approaches the center of the rapier wheel.

In one embodiment, spokes that differ in shape are provided. In other embodiments, the first spokes and the second spokes have a same shape, wherein the first spoke and the second spoke of each pair of spokes are arranged symmetrically to a radial direction through the crossing point of this pair of spokes. When providing spokes having a same shape, the crossing points of all pairs of spokes are arranged on a first imaginary circle.

In one embodiment, in addition to a curvature towards the outer ring, the spokes are also curved in a direction of an axis of rotation of the rapier wheel. In another embodiment, the first spokes and the second spokes are arranged in two parallel planes, wherein in one embodiment the spokes of each pair are connected to each other at the crossing points. In particular embodiments, the rapier wheel is flat, wherein the first spokes and the second spokes are arranged in a common plane.

In embodiments, the pairs of spokes are evenly distributed about the rapier wheel. Depending on the number of spokes, the size of the rapier wheel and the size of the spokes, the first spoke of each pair of spokes does only cross the second spoke of the associated pair of spokes, or in addition crosses one or more second spokes of other pairs of spokes.

In one embodiment, the crossing points of the pairs of spokes are arranged on a first imaginary circle, wherein the first spokes and the second spokes of two immediately neighboring pairs of spokes cross at second crossing points, wherein the second crossing points are arranged on a second imaginary circle having a smaller radius than the first imaginary circle. In the context of the invention, pairs of spokes that are successively arranged along the circumference of the outer ring are referred to as immediately neighboring pairs of spokes.

In one embodiment, only the first spokes and the second spokes of immediately neighboring pairs of spokes cross each other. In this case, in one embodiment, the second imaginary circle is at a region of the inner ring, wherein connecting areas are formed between the inner ring and the first spokes and the second spokes of the two pairs of spokes.

In one embodiment each first spoke crosses the second spokes of two or more pairs of spokes. In case the first spokes cross the second spokes of more than one other pair of spokes, an imaginary circle of the crossing points decreases with the distance between the pairs of spokes at the outer ring.

In one embodiment, an imaginary circle of crossing points between the first spoke and the second spoke furthest away from the first spoke in a circumferential direction of the rapier wheel, but still crossing the first spoke, is at a region of the inner ring, wherein connecting areas are formed between the inner ring and the first spokes and the second spokes of the two associated pairs of spokes.

The connecting areas at the inner ring in particular embodiments are closed. In the context of the application, the expression "area ... is closed" is used to describe that the area is filled with material. When the first spokes and the second spokes of different pairs of spokes cross each other in a region close to an outer edge of the inner ring, essentially triangular connecting areas are formed, wherein when filling the connecting area, an inner ring having a starshaped outer edge is formed.

In one embodiment, supporting rods are provided that extend between the crossing points of the pairs of spokes and the outer ring. The supporting rods extend in the radial direction of the pair of spokes to provide an additional support of the outer ring. In one embodiment, straight supporting rods are provided. For example, the supporting rods are arranged centered between the first spokes and the second spokes. Hence, in a circumferential direction of the outer ring a distance between the first spoke and the supporting rod of each pair of spokes is the same as a distance between the second spoke and the supporting rod of said pair of spokes. In other embodiments, Y-shaped supporting rods are provided.

In one embodiment, straight supporting rods are provided that extend in radial direction between the crossing point of each pair of spokes and the outer ring. Preferably, the pairs of spokes are evenly distributed, so that in the circumferential direction of the outer ring the distance between the first spoke and the supporting rod of each pair of spokes is the same as a distance between the first spokes and the second spokes of immediately neighboring pairs of spokes. Therefore, the supporting rods allow that the outer ring is supported at a plurality of at least essentially equidistantly arranged regions in the circumferential direction.

In one embodiment, transition regions between the first spokes and the outer ring and between the second spokes and the outer ring are reinforced. Due to the design of the rapier wheel having convexly curved spokes, only local stresses occur, which are not distributed over a large area of the rapier wheel. Hence, by reinforcing only a transition region between the spokes and the outer ring, a durability of the rapier wheel can be increased without or at least without a significant increase of the moment of inertia about the drive shaft and/or the weight of the rapier wheel.

In one embodiment, the number of pairs of spokes is uneven, wherein in particular the number is eleven, thirteen or fifteen. Providing an uneven number of spokes is preferred to minimize warping effects during manufacturing of the rapier wheel and/or during operation of the rapier wheel.

According to a second aspect, a rapier weaving machine having a rapier wheel with pairs of spokes comprising a first spoke and a second spoke is provided, wherein the first spoke and the second spoke extend in opposite directions and cross each other at a crossing point between the inner ring and the outer ring, and wherein the first spoke and the second spoke are each convexly curved toward the outer ring.

### BRIEF DESCRIPTION OF THE DRAWINGS

In the following, embodiments of the invention will be described in detail with reference to the drawings. Throughout the drawings, the same elements will be denoted by the same reference numerals.
- Fig. 1: shows a part of a weaving machine with a rapier wheel for a rapier.
- Fig. 2: shows the rapier wheel of Fig. 1 in isolation.
- Fig. 3: shows a perspective view of the rapier wheel of Fig. 2.
- Fig. 4: shows a second embodiment of a rapier wheel.
- Fig. 5: shows a third embodiment of a rapier wheel.
- Fig. 6: shows a fourth embodiment of a rapier wheel.

### DETAILED DESCRIPTION OF EMBODIMENTS OF THE INVENTION

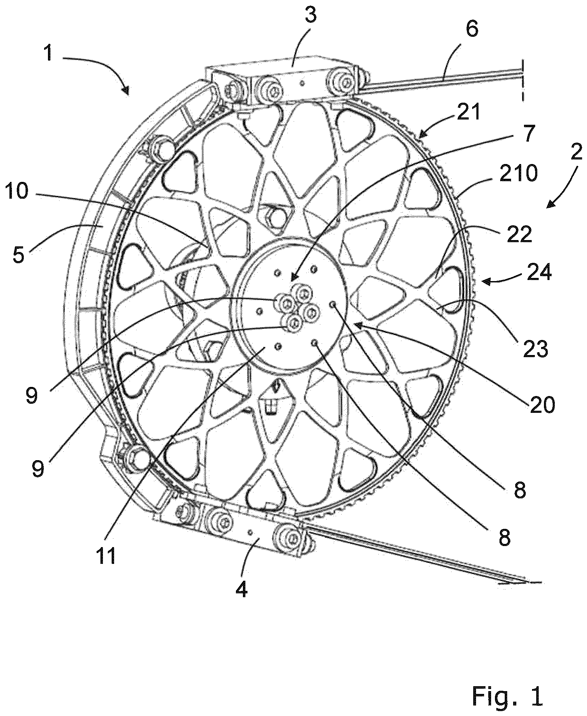

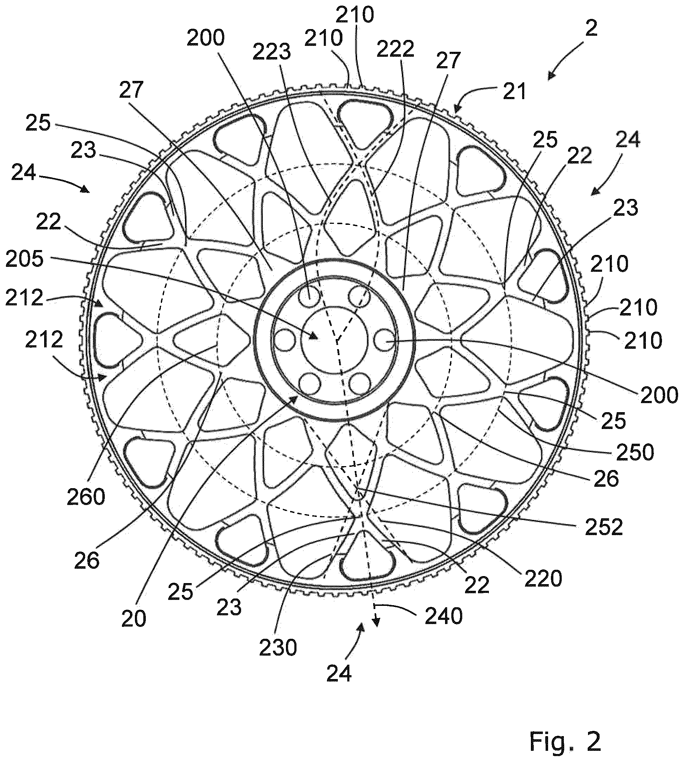

Fig. 1 shows a part of a weaving machine 1 with a rapier wheel 2 for driving a rapier 6. At the periphery of the rapier wheel 2, two guide blocks 3, 4 and an arched guide section 5 are provided for guiding the rapier 6 at the rapier wheel 2. The rapier wheel 2 of Fig. 1 is shown in isolation in Fig. 2.

The rapier wheel 2 shown in Figs. 1 and 2 has an inner ring 20, an outer ring 21, and a number of spokes 22, 23 extending between the inner ring 20 and the outer ring 21 and connecting the inner ring 20 with the outer ring 21.

The inner ring 20 is configured for mounting the rapier wheel 2 via the inner ring 20 to a drive shaft 10. In the embodiment shown in Figs. 1 and 2, for this purpose, a number of through holes 200 (see Fig. 2) are provided in the rapier wheel 2, in particular six evenly distributed through holes 200 are provided, for a screw connection 7 between the inner ring 20 and the drive shaft 10. To this end, for example, a connection ring 11 is provided onto which the rapier wheel 2 is fixed by six bolts 8 extending through the through holes 200 and four bolts 9 are provided for fixing the connection ring 11 to the drive shaft 10.

The outer ring 21 is provided with teeth 210 configured to engage with the rapier 6 for driving the rapier 6 back-and-forth.

The spokes 22, 23 are arranged crosswise forming pairs of spokes 24, each pair of spokes 24 comprising a first spoke 22 and a second spoke 23. The first spoke 22 and the second spoke 23 of each pair of spokes 24 cross each other at a crossing point 25 between the inner ring 20 and the outer ring 21. A radial direction 240 (shown by the dotted arrow) through the crossing point 25 of a pair of spokes 24 is referred to as the radial direction 240 of said pair of spokes 24. The first spokes 22 and the second spokes 23 are all inclined or tilted with respect to the radial direction 240, wherein the first spokes 22 and the second spokes 23 extend in opposite directions.

In the embodiment shown, the spokes 22, 23 are identical in shape, wherein the first spoke 22 and the second spoke 23 of each pair of spokes 24 are arranged symmetrically to the radial direction 240 of said pair of spokes 24. Therefore, the crossing points 25 of all pairs of spokes 24 are arranged on a first imaginary circle 250 (shown by a dotted line).

The first spokes 22 and the second spokes 23 are each convexly curved toward the outer ring 21. As schematically shown in Fig. 2, the spokes 22, 23 extend entirely along a path which seen in the radial direction 240 of the associated pair of spokes 24 is above virtual straight lines 220, 230 (shown as dotted lines in Fig. 2) connecting ends of the spokes 22, 23 at the inner ring 20 and the outer ring 21. As shown in Fig. 2, due to the convex curvature, the crossing point 25 of the first spoke 22 and the second spoke 23 is closer to the outer ring 21 than a crossing point 252 of the two virtual straight lines 220, 230 crossing each other.

In the embodiment shown, a curvature 222 (shown by a dotted line) of the spokes 22 starts at a center 205 of the rapier wheel 2 and increases towards the outer ring 21. In the embodiment shown, the curvature 222 increases continuously towards the outer ring 21. A curvature 223 (shown by a dotted line) of the spokes 23 is similar as the curvature 222 of the spokes 22.

In use, the rapier 6 driven by the rapier wheel 2 exerts forces on the outer ring 21. The convexly curved spokes 22, 23 arranged in pairs of spokes 24 allow to counter tangential forces as well as radial forces exerted on the outer ring 21 by the rapier 6, wherein resulting bending stresses on the spokes 22, 23 due to external forces can be reduced.

The pairs of spokes 24 are evenly distributed about the rapier wheel 2. In the embodiment shown in Figs. 1 and 2, eleven pairs of spokes 24 are provided, wherein first spokes 22 and second spokes 23 of two immediately neighboring pairs of spokes 24 cross at second crossing points 26. The second crossing points 26 are arranged on a second imaginary circle 260 (shown by a dotted line) having a smaller radius than the first imaginary circle 250.

In the embodiment shown, the second imaginary circle 260 is at a region of the inner ring 20, wherein triangular connecting areas 27 are formed between the inner ring 20 and the first spokes 22 and the second spokes 23 of the two immediately neighboring pairs of spokes 24. The connecting areas 27 in the embodiment shown are closed. In other words, triangles formed by the spokes 22, 23 of adjacent pairs of spokes 24 and the inner ring 20 are filled with material.

In the embodiment shown, transition regions 212 between the spokes 22, 23 and the outer ring 21 are reinforced, for example have an increasing surface near the outer ring 21.

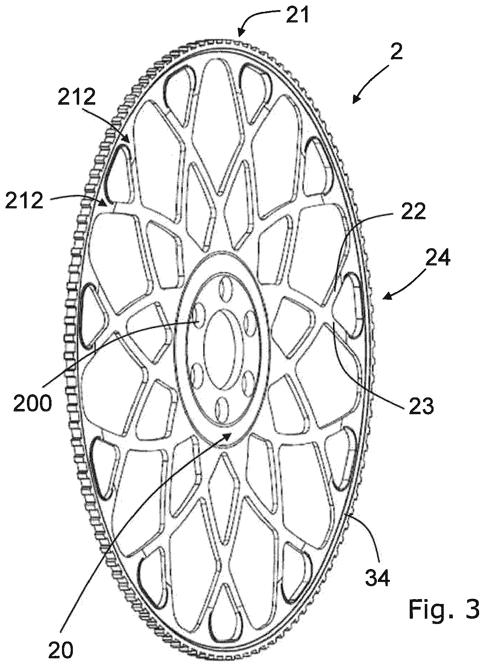

As shown in Fig. 3 the axial width of the spokes 22, 23, thus the width in the direction of the axis of rotation of the rapier wheel 2, is variable from the inner ring 20 towards the outer ring 21. For example, the axial width decreases from the inner ring 20 towards the outer ring 21, wherein in particular the axial width of the spokes 22, 23 decreases continuously from the inner ring 20 towards the outer ring 21. As shown in Fig. 3 the axial width of the inner ring 20 is constant, the axial width of the spokes 22, 23 decreases in the radial direction 240 towards the outer ring 21, and near the outer ring 21 the axial width of the rapier wheel 2 increases again via a chamfer 34 towards the outer ring 21.

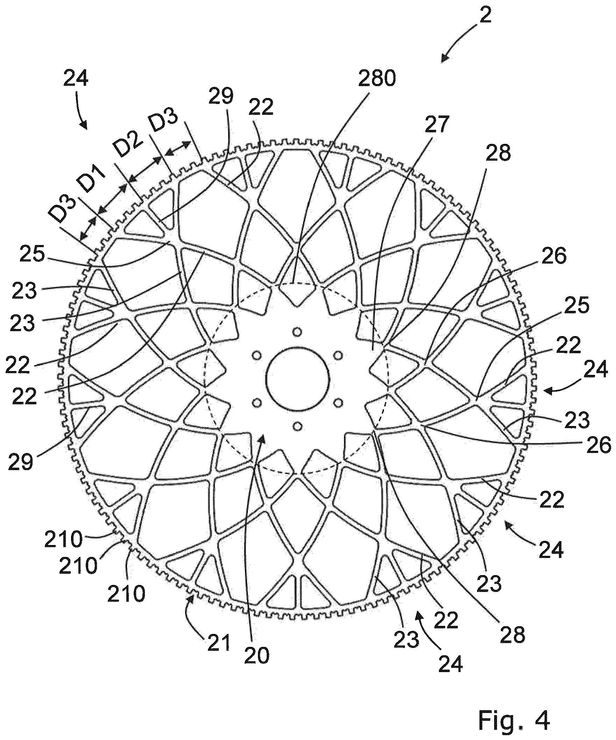

Fig. 4 shows a second embodiment of a rapier wheel 2 having an inner ring 20, an outer ring 21, and a number of convexly curved first spokes 22 and second spokes 23 extending between the inner ring 20 and the outer ring 21. The first spokes 22 and the second spokes 23 are arranged in pairs of spokes 24 having a crossing point 25, wherein in the embodiment shown in Fig. 4, thirteen pairs of spokes 24 are provided. As in comparison to Figs. 1 and 2 the number of pairs of spokes 24 is increased, whereas a diameter of the rapier wheel 2 remains at least essentially unchanged, the pairs of spokes 24 are arranged closer to each other. Therefore, in the embodiment shown in Fig. 4, each first spoke 22 crosses second spokes 23 of two other pairs of spokes 24 at second crossing points 26 and third crossing points 28, respectively. The third crossing points 28 are arranged on a third imaginary circle 280 (shown by a dotted line).

Triangular connecting areas 27 are formed between the inner ring 20 and the first spokes 22 and the second spokes 23 of two different pairs of spokes 24 that cross each other at the third crossing point 28. The connecting areas 27 in the embodiment shown are closed, i.e. filled with material.

In the embodiment shown in Fig. 4, a straight supporting rod 29 is provided that extends in radial direction 240 between the crossing point 25 of each pair of spokes 24 and the outer ring 21. In a circumferential direction of the outer ring 21, a distance D1 between the first spoke 22 and the supporting rod 29 of each pair of spokes 24 is the same as a distance D2 between the second spoke 23 and the supporting rod 29 of said pair of spokes 24. In the embodiment shown in Fig. 4, the pairs of spokes 24 are evenly distributed and a number of pairs of spokes 24 can be chosen with respect to a diameter of the rapier wheel 2, so that in the circumferential direction of the outer ring 21 the distance D1 between the first spoke 22 and the supporting rod 29 of each pair of spokes 24 is the same as a distance D3 between the first spokes 22 and the second spokes 23 of immediately neighboring pairs of spokes 24.

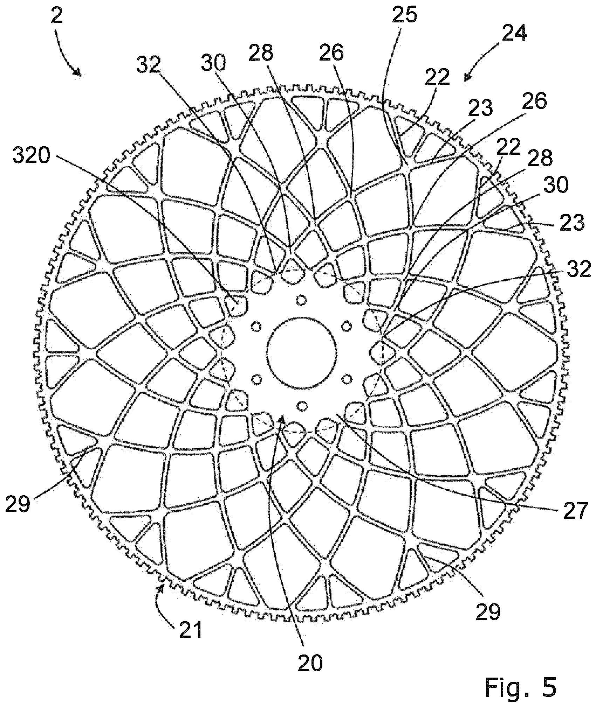

Fig. 5 shows a third embodiment of a rapier wheel 2 having an inner ring 20, an outer ring 21, and a number of convexly curved first spokes 22 and second spokes 23 extending between the inner ring 20 and the outer ring 21. The first spokes 22 and the second spokes 23 are arranged in pairs of spokes 24 having a crossing point 25, wherein in the embodiment shown in Fig. 4, fifteen pairs of spokes 24 are provided. As in comparison to Fig. 4, the number of pairs of spokes 24 is further increased, whereas a diameter of the rapier wheel 2 remains at least essentially unchanged, the pairs of spokes 24 are arranged closer to each other. Therefore, in the embodiment shown in Fig. 4, each first spoke 22 crosses second spokes 23 of four other pairs of spokes 24 at second crossing points 26, third crossing points 28, fourth crossing points 30 and fifth crossing points 32, respectively. The fifth crossing points 32 are arranged on a fourth imaginary circle 320 (shown by a dotted line).

Triangular connecting areas 27 are formed between the inner ring 20 and the first spokes 22 and the second spokes 23 of different pairs of spokes 24 that cross each other at the fifth crossing point 32. The connecting areas 27 in the embodiment shown are closed, i.e. filled with material. In the embodiment shown in Fig. 4, supporting rods 29 are provided that extend between the crossing points 25 of the pairs of spokes 24 and the outer ring 21.

The rapier wheels 2 shown in the above described embodiments are all flat, i.e. all spokes 22, 23 as well as all crossing points 25, 26, 28, 30, 32 are arranged in a common plane.

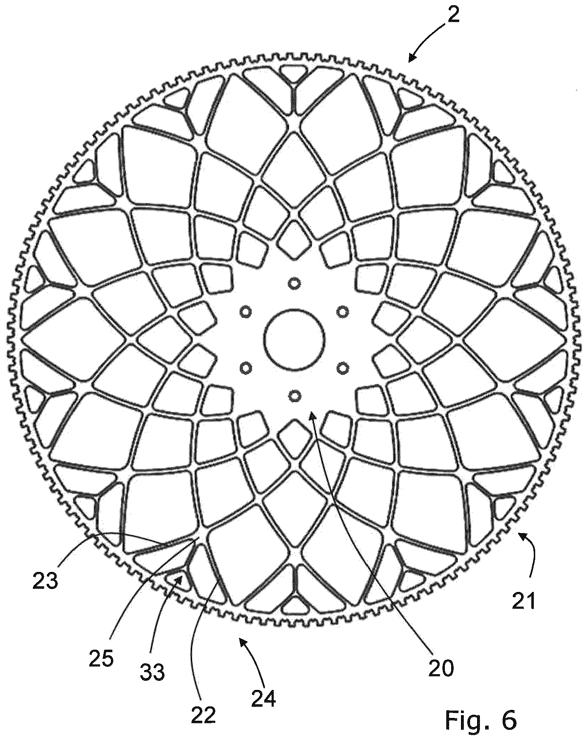

Fig. 6 shows a fourth embodiment of a rapier wheel 2 similar to the rapier wheel shown in Fig. 5 and having an inner ring 20, an outer ring 21, and a number of convexly curved first spokes 22 and second spokes 23 extending between the inner ring 20 and the outer ring 21. As can be seen the thickness of the spokes 22, 23 along the plane of the rapier wheel 2 decreases towards the outer ring 21, wherein in particular the thickness of the spokes 22, 23 decreases continuously towards the outer ring 21. For example, Y-shaped supporting rods 33 are provided that extend between the crossing points 25 of the pairs of spokes 24 and the outer ring 21.

The rapier wheels shown in the figures are only by way of example. Further embodiments may be achieved by combination of features and elements that have been described in association to different embodiments within the scope of the appended claims.

## Claims

1. Rapier wheel for a rapier weaving machine having an inner ring (20), an outer ring (21), and a number of spokes (22, 23), wherein the inner ring (20) is configured for mounting the inner ring (20) to a drive shaft (10), wherein the outer ring (21) is provided with teeth (210) configured for engaging with a rapier (6) for driving the rapier (6), wherein the spokes (22, 23) extend between the inner ring (20) and the outer ring (21) and connect the inner ring (20) with the outer ring (21), wherein the spokes (22, 23) are arranged crosswise in pairs of spokes (24) comprising a first spoke (22) and a second spoke (23), and wherein the first spoke (22) and the second spoke (23) extend in opposite directions and cross each other at a crossing point (25) between the inner ring (20) and the outer ring (21), **characterized in that** the first spoke (22) and the second spoke (23) are each convexly curved toward the outer ring (21).

2. Rapier wheel according to claim 1, **characterized in that** a curvature (222) of the first spokes (22) and a curvature (223) of the second spokes (23) in each case starts at a center (205) of the rapier wheel (2) and increases towards the outer ring (21), wherein in particular the curvature (222) increases continuously towards the outer ring (21).

3. Rapier wheel according to claim 1 or 2, **characterized in that** the first spokes (22) and the second spokes (23) have one same shape, wherein the first spoke (22) and the second spoke (23) of each pair of spokes (24) are arranged symmetrically to a radial direction (240) through the crossing point (25) of this pair of spokes (24).

4. Rapier wheel according to claim 1, 2 or 3 **characterized in that** the rapier wheel (2) is flat, wherein the first spokes (22) and the second spokes (23) are arranged in a common plane.

5. Rapier wheel according to any one of claims 1 to 4, **characterized in that** the pairs of spokes (24) are evenly distributed about the rapier wheel (2).

6. Rapier wheel according to claim 5, **characterized in that** the crossing points (25) of the pairs of spokes (24) are arranged on a first imaginary circle (250), wherein the first spokes (22) and the second spokes (23) of two immediately neighboring pairs of spokes (24) cross at second crossing points (26), wherein the second crossing points (26) are arranged on a second imaginary circle (260) having a smaller radius than the first imaginary circle (250).

7. Rapier wheel according to claim 6, **characterized in that** the second imaginary circle (260) is at a region of the inner ring (20), wherein connecting areas (27) are formed between the inner ring (20) and the first spokes (22) and the second spokes (23) of the two pairs of spokes (24).

8. Rapier wheel according to claim 6, **characterized in that** each first spoke (22) crosses the second spokes (23) of two or more pairs of spokes (24).

9. Rapier wheel according to claim 8, **characterized in that** an imaginary circle (280, 320) of crossing points (28, 32) between the first spoke (22) and the second spoke (23) furthest away from the first spoke (22) in a circumferential direction of the rapier wheel (2), but still crossing the first spoke (22), is at a region of the inner ring (20), wherein connecting areas (27) are formed between the inner ring (20) and the first spokes (22) and the second spokes (23) of the two associated pairs of spokes (24).

10. Rapier wheel according to any one of claims 7 or 9, **characterized in that** the connecting areas (27) at the inner ring (20) are closed.

11. Rapier wheel according to any one of claims 1 to 10, **characterized in that** supporting rods are provided that extend between the crossing points (25) of the pairs of spokes (24) and the outer ring (21), in particular straight supporting rods (29) are provided that extend in radial direction (240) between the crossing point (25) of each pair of spokes (24) and the outer ring (21).

12. Rapier wheel according to claim 11, **characterized in that** the straight supporting rods (29) are provided that extend in radial direction (240) between the crossing point (25) of each pair of spokes (24) and the outer ring (21), wherein in a circumferential direction of the outer ring (21) a distance (D1) between the first spoke (22) and the supporting rod (29) of each pair of spokes (24) is the same as a distance (D2) between the second spoke (23) and the supporting rod (29) of said pair of spokes (24), wherein in particular the pairs of spokes (24) are evenly distributed, so that in the circumferential direction of the outer ring (21) the distance (D1) between the first spoke (22) and the supporting rod (29) of each pair of spokes (24) is the same as a distance (D3) between the first spokes (22) and the second spokes (23) of immediately neighboring pairs of spokes (24) and the distance (D2) between the second spoke (23) and the supporting rod (29) of each pair of spokes (24) is the same as a distance (D3) between the first spokes (22) and the second spokes (23) of immediately neighboring pairs of spokes (24).

13. Rapier wheel according to any one of claims 1 to 12, **characterized in that** transition regions (212) between the outer ring (21) and the first spokes (22) and between the outer ring (21) and the second spokes (23) are reinforced.

14. Rapier wheel according to any one of claims 1 to 13, **characterized in that** the number of pairs of spokes (24) is uneven, wherein in particular the number is eleven, thirteen or fifteen.

15. Rapier weaving machine having a rapier wheel (2) according to any one of claims 1 to 14.

## Patentansprüche

1. Greiferrad für eine Greiferwebmaschine, das einen Innenring (20), einen Außenring (21) und eine Anzahl von Speichen (22, 23) aufweist, wobei der Innenring (20) dazu ausgebildet ist, den Innenring (20) an einer Antriebswelle (10) zu montieren, wobei der Außenring (21) mit Zähnen (210) versehen ist, die dazu ausgebildet sind, mit einem Rapier (6) zum Antreiben des Rapiers (6) zusammenzuwirken, wobei sich die Speichen (22, 23) zwischen dem Innenring (20) und dem Außenring (21) erstrecken und den Innenring (20) mit dem Außenring (21) verbinden, wobei die Speichen (22, 23) kreuzweise in Speichenpaaren (24) umfassend eine erste Speiche (22) und eine zweite Speiche (23) angeordnet sind, und wobei sich die erste Speiche (22) und die zweite Speiche (23) in entgegengesetzte Richtungen erstrecken und sich an einem Kreuzungspunkt (25) zwischen dem Innenring (20) und dem Außenring (21) kreuzen, **dadurch gekennzeichnet, dass** die erste Speiche (22) und die zweite Speiche (23) jeweils zum Außenring (21) hin konvex gekrümmt sind.

2. Greiferrad nach Anspruch 1, **dadurch gekennzeichnet, dass** eine Krümmung (222) der ersten Speichen (22) und eine Krümmung (223) der zweiten Speichen (23) jeweils an einem Mittelpunkt (205) des Greiferrads (2) beginnt und zum Außenring (21) hin zunimmt, wobei insbesondere die Krümmung (222) zum Außenring (21) hin kontinuierlich zunimmt.

3. Greiferrad nach Anspruch 1 oder 2, **dadurch gekennzeichnet, dass** die ersten Speichen (22) und die zweiten Speichen (23) eine gleiche Form aufweisen, wobei die erste Speiche (22) und die zweite Speiche (23) jedes Speichenpaares (24) symmetrisch zu einer radialen Richtung (240) durch den Kreuzungspunkt (25) dieses Speichenpaares (24) angeordnet sind.

4. Greiferrad nach Anspruch 1, 2 oder 3 **dadurch gekennzeichnet, dass** das Greiferrad (2) flach ist, wobei die ersten Speichen (22) und die zweiten Speichen (23) in einer gemeinsamen Ebene angeordnet sind.

5. Greiferrad nach einem der Ansprüche 1 bis 4, **dadurch gekennzeichnet, dass** die Speichenpaare (24) gleichmäßig um das Greiferrad (2) verteilt sind.

6. Greiferrad nach Anspruch 5, **dadurch gekennzeichnet, dass** die Kreuzungspunkte (25) der Speichenpaare (24) auf einem ersten imaginären Kreis (250) angeordnet sind, wobei sich die ersten Speichen (22) und die zweiten Speichen (23) zweier unmittelbar benachbarter Speichenpaare (24) in zweiten Kreuzungspunkten (26) kreuzen, wobei die zweiten Kreuzungspunkte (26) auf einem zweiten imaginären Kreis (260) angeordnet sind, der einen kleineren Radius als der erste imaginäre Kreis (250) aufweist.

7. Greiferrad nach Anspruch 6, **dadurch gekennzeichnet, dass** der zweite imaginäre Kreis (260) in einem Bereich des Innenrings (20) liegt, wobei Verbindungsbereiche (27) zwischen dem Innenring (20) und den ersten Speichen (22) und den zweiten Speichen (23) der beiden Speichenpaare (24) ausgebildet sind.

8. Greiferrad nach Anspruch 6, **dadurch gekennzeichnet, dass** jede erste Speiche (22) die zweiten Speichen (23) zweier oder mehrerer Speichenpaare (24) kreuzt.

9. Greiferrad nach Anspruch 8, **dadurch gekennzeichnet, dass** ein imaginärer Kreis (280, 320) von Kreuzungspunkten (28, 32) zwischen der ersten Speiche (22) und der zweiten Speiche (23), die in einer Umfangsrichtung des Greiferrads (2) von der ersten Speiche (22) am weitesten entfernt sind, aber immer noch die erste Speiche (22) kreuzen, in einem Bereich des Innenrings (20) liegt, wobei Verbindungsbereiche (27) zwischen dem Innenring (20) und den ersten Speichen (22) und den zweiten Speichen (23) der beiden zugehörigen Speichenpaare (24) ausgebildet sind.

10. Greiferrad nach einem der Ansprüche 7 oder 9, **dadurch gekennzeichnet, dass** die Verbindungsbereiche (27) am Innenring (20) geschlossen sind.

11. Greiferrad nach einem der Ansprüche 1 bis 10, **dadurch gekennzeichnet, dass** sich zwischen den Kreuzungspunkten (25) der Speichenpaare (24) und dem Außenring (21) erstreckende Stützstäbe vorgesehen sind, insbesondere gerade Stützstäbe (29) vorgesehen sind, die sich in radialer Richtung (240) zwischen dem Kreuzungspunkt (25) jedes Speichenpaares (24) und dem Außenring (21) erstrecken.

12. Greiferrad nach Anspruch 11, **dadurch gekennzeichnet, dass** die geraden Stützstäbe (29) vorgesehen sind, die sich in radialer Richtung (240) zwischen dem Kreuzungspunkt (25) jedes Speichenpaares (24) und dem Außenring (21) erstrecken, wobei in einer Umfangsrichtung des Außenrings (21) ein Abstand (D1) zwischen der ersten Speiche (22) und dem Stützstab (29) jedes Speichenpaares (24) gleich einem Abstand (D2) zwischen der zweiten Speiche (23) und dem Stützstab (29) dieses Speichenpaares (24) ist, wobei insbesondere die Speichenpaare (24) gleichmäßig verteilt sind, so dass in der Umfangsrichtung des Außenrings (21) der Abstand (D1) zwischen der ersten Speiche (22) und dem Stützstab (29) jedes Speichenpaares (24) gleich einem Abstand (D3) zwischen den ersten Speichen (22) und den zweiten Speichen (23) unmittelbar benachbarter Speichenpaare (24) ist und die Abstand (D2) zwischen der zweiten Speiche (23) und dem Stützstab (29) jedes Speichenpaares (24) gleich dem Abstand (D3) zwischen den ersten Speichen (22) und den zweiten Speichen (23) unmittelbar benachbarter Speichenpaare (24) ist.

13. Greiferrad nach einem der Ansprüche 1 bis 12, **dadurch gekennzeichnet, dass** Übergangsbereiche (212) zwischen dem Außenring (21) und den ersten Speichen (22) und zwischen dem Außenring (21) und den zweiten Speichen (23) verstärkt sind.

14. Greiferrad nach einem der Ansprüche 1 bis 13, **dadurch gekennzeichnet, dass** die Anzahl der Speichenpaare (24) ungerade ist, wobei insbesondere die Anzahl elf, dreizehn oder fünfzehn ist.

15. Greiferwebmaschine, die ein Greiferrad (2) nach einem der Ansprüche 1 bis 14 aufweist.

## Revendications

1. Roue de lance pour une machine à tisser à lances ayant une bague intérieure (20), une bague extérieure (21) et un nombre de rayons (22, 23), dans laquelle la bague intérieure (20) est configurée pour monter la bague intérieure (20) sur un arbre d'entraînement (10), dans laquelle la bague extérieure (21) est prévue de dents (210) configurées pour s'engager avec une lance (6) pour entraîner la lance (6), dans laquelle les rayons (22, 23) s'étendent entre la bague intérieure (20) et la bague extérieure (21) et relient la bague intérieure (20) à la bague extérieure (21), dans laquelle les rayons (22, 23) sont disposés transversalement par paires de rayons (24) comprenant un premier rayon (22) et un deuxième rayon (23), et dans laquelle le premier rayon (22) et le deuxième rayon (23) s'étendent dans de directions opposées et traversent les uns les autres au niveau d'un point de croisement (25) entre la bague intérieure (20) et la bague extérieure (21), **caractérisée en ce que** le premier rayon (22) et le deuxième rayon (23) sont chacun courbés de manière convexe vers la bague extérieure (21).

2. Roue de lance selon la revendication 1, **caractérisée en ce qu'**une courbure (222) des premiers rayons (22) et une courbure (223) des deuxièmes rayons (23) commence dans chaque cas au niveau d'un centre (205) de la roue de lance (2) et augmente vers la bague extérieure (21), dans laquelle en particulier la courbure (222) augmente continuellement vers la bague extérieure (21).

3. Roue de lance selon la revendication 1 ou 2, **caractérisée en ce que** les premiers rayons (22) et les deuxièmes rayons (23) ont une même forme, dans laquelle le premier rayon (22) et le deuxième rayon (23) de chaque paire de rayons (24) sont disposés symétriquement à une direction radiale (240) à travers le point de croisement (25) de cette paire de rayons (24).

4. Roue de lance selon la revendication 1, 2 ou 3, **caractérisée en ce que** la roue de lance (2) est plate, dans laquelle les premiers rayons (22) et les deuxièmes rayons (23) sont disposés dans un plan commun.

5. Roue de lance selon l'une quelconque des revendications 1 à 4, **caractérisée en ce que** les paires de rayons (24) sont distribués pair autour de la roue de lance (2).

6. Roue de lance selon la revendication 5, **caractérisée en ce que** les points de croisement (25) des paires de rayons (24) sont disposés sur un premier cercle imaginaire (250), dans laquelle les premiers rayons (22) et les deuxièmes rayons (23) de deux paires de rayons (24) immédiatement adjacentes traversent au niveau de deuxièmes points de croisement (26), dans laquelle les deuxièmes points de croisement (26) sont disposés sur un deuxième cercle imaginaire (260) ayant un radius plus petit que le premier cercle imaginaire (250).

7. Roue de lance selon la revendication 6, **caractérisée en ce que** le deuxième cercle imaginaire (260) se trouve au niveau d'une région de la bague intérieure (20), dans laquelle des zones de liaison (27) sont formées entre la bague intérieure (20) et les premiers rayons (22) et les deuxièmes rayons (23) des deux paires de rayons (24).

8. Roue de lance selon la revendication 6, **caractérisée en ce que** chaque premier rayon (22) traverse les deuxièmes rayons (23) de deux ou plusieurs paires de rayons (24).

9. Roue de lance selon la revendication 8, **caractérisée en ce qu'**un cercle imaginaire (280, 320) de points de croisement (28, 32) entre le premier rayon (22) et le deuxième rayon (23) le plus éloigné du premier rayon (22) dans une direction circonférentielle de la roue de lance (2), mais traversant toujours le premier rayon (22), se trouve au niveau d'une région de la bague intérieure (20), dans laquelle des régions de liaison (27) sont formées entre la bague intérieure (20) et les premiers rayons (22) et les deuxièmes rayons (23) des deux paires de rayons (24) associées.

10. Roue de lance selon l'une quelconque des revendications 7 ou 9, **caractérisée en ce que** les régions de liaison (27) au niveau de la bague intérieure (20) sont fermées.

11. Roue de lance selon l'une quelconque des revendications 1 à 10, **caractérisée en ce que** des tiges de support sont prévues qui s'étendent entre les points de croisement (25) des paires de rayons (24) et la bague extérieure (21), en particulier des tiges de support (29) droites sont prévues qui s'étendent dans direction radiale (240) entre le point de croisement (25) de chaque paire de rayons (24) et la bague extérieure (21).

12. Roue de lance selon la revendication 11, **caractérisée en ce que** les tiges de support (29) droites sont prévues qui s'étendent dans direction radiale (240) entre le point de croisement (25) de chaque paire de rayons (24) et la bague extérieure (21), dans laquelle dans une direction circonférentielle de la bague extérieure (21), une distance (D1) entre le premier rayon (22) et la tige de support (29) de chaque paire de rayons (24) est la même qu'une distance (D2) entre le deuxième rayon (23) et la tige de support (29) de ladite paire de rayons (24), dans laquelle en particulier les paires de rayons (24) sont distribués pair, de telle sorte que dans la direction circonférentielle de la bague extérieure (21) la distance (D1) entre le premier rayon (22) et la tige de support (29) de chaque paire de rayons (24) est la même qu'une distance (D3) entre les premiers rayons (22) et les deuxièmes rayons (23) de paires de rayons (24) immédiatement adjacentes et la distance (D2) entre le deuxième rayon (23) et la tige de support (29) de chaque paire de rayons (24) est la même qu'une distance (D3) entre les premiers rayons (22) et les deuxièmes rayons (23) de paires de rayons (24) immédiatement adjacentes.

13. Roue de lance selon l'une quelconque des revendications 1 à 12, **caractérisée en ce que** des régions de transition (212) entre la bague extérieure (21) et les premiers rayons (22) et entre la bague extérieure (21) et les deuxièmes rayons (23) sont renforcées.

14. Roue de lance selon l'une quelconque des revendications 1 à 13, **caractérisée en ce que** le nombre de paires de rayons (24) est impair, dans laquelle en particulier le nombre est onze, treize ou quinze.

15. Machine à tisser à lances comprenant une roue de lance (2) selon l'une quelconque des revendications 1 à 14.
